# EUROPEAN PATENT APPLICATION

(11) **EP 1 717 694 A1**
(43) Date of publication of application: **02.11.2006**
(21) Application number: 05300315.8
(22) Date of filing: 25.04.2005
(51) Int. Cl.: G06F 9/44, G06F 17/30

(54) **State-machine driven web application**

(71) Applicant: Hewlett-Packard Development Company, L.P., Houston, TX 77070 (US)
(72) Inventor: Manfredi, Raphael, 38053 Grenoble Cedex 09 (FR); Douillet, Laurent, 38053 Grenoble Cedex 09 (FR)
(74) Representative: Lloyd, Richard Graham

(57) **Abstract**

A web server is described having a control arrangement comprising a state machine that is arranged to process an event initiated at a browser to transition from one state to another and a mechanism for generating, in response to entry of the states, corresponding web pages for transmission to the browser. The state machine comprises at least one superstate that comprises first and second states, the first state being selected by default on entry to the superstate, and at least one transition is defined from the superstate to the second state, the transition being associated with an action that provides to the browser information that is not destined to viewed in the browser. A web page generated in response to entry of the first state includes at least a link corresponding to the transition and the arrangement is such that entry into the second state does not result in the generation of a web page for transmission to the browser.

## Description

### BACKGROUND OF THE INVENTION

The present invention relates to web servers and web applications of the type wherein responses to a user are associated with states of a state machine, the responses being generated as a result of a transition into their associated state.

The HTML, or other, code that makes up each web page of the World Wide Web is commonly dynamically generated by an event-driven program that is running on server hardware. This type of program is known as a web application. In the following, the terms "web server" will be used to refer to the logical entity that provides a web page in response to an http request and "web application" to the set of components that provide this function using general-purpose computing platforms within general-purpose operating environments such as are provided by the Microsoft Windows, Linux or HP-UX operating systems and their related programming libraries and tools.

Web applications are generally event-driven interactive systems which react to HTTP requests from the client, the http request being directed to a web address (a URL). The web application will generate and return a web page to the browser. The difference between this type of arrangement and a simple "static" site is that each action the user takes can have some semantics associated with it. In other words, the resulting web page can differ according to the user, the current time or other factors prevailing in the system.

When the web application receives an event, it is arranged to evaluate the received event and decide how to respond to the client. This evaluation process may involve interaction with business logic of some kind. The interaction with the business logic can take place independently of the screen design or user interface and often involves transactions with back-end systems, such as remote databases.

It is known to use a state machine for controlling a web application. For instance, an article made available at http://www.uidesign.net/1999/papers/webmvc part1.html describes how a deterministic presentation layer can be achieved by modeling the User Interface using statecharts and then implementing the statechart design as part of a Model-View-Controller (MVC) engine that includes a State machine. A further example of the use of a state machine for controlling a web application can be found in US2002/0080200 which describes a web application in which a state machine is provided to manage execution and display of a web site. The state machine includes display states and action states. In addition, the Perl module CGI::MxScreen uses a state machine to express its processing logic.

Our co-pending unpublished European Patent Applications numbers 04300265, 04300266 and 04300264 filed May 7 2004 describe a web application framework for implementing a web server that is controlled by a hierarchical state machine. The application framework comprises a state machine controller class and a context object class for creating objects containing data relating to each state. A state context object attached to a particular state is instantiated once, the first time the state is entered, and then remains in existence throughout the session. This allows the data pertaining to the state itself to be conveniently stored there.

In the state machine definition each atomic state, that is each state that does not itself have sub-states, represents a screen that the user will see, with transitions among the various states representing the navigation flow between the screens. Superstates are used to encapsulate and provide transitions that are common to all of their substates and to provide boundary functions for various functional zones.

One problem with this approach is that there are some behaviours in the web browser-webserver interaction that do not require a new view to be generated. For instance, some we pages provide the user with http download links that enable information to be downloaded that is not rendered by the web-browser directly, but rather consumed by another application, such as a spreadsheet program or document viewer. In this case, the view displayed by the browser does not change and is intended to remain valid. On the other hand, at the web server side, the state of the state machine will have changed and the download action will have been carried out as a result of a state transition.

This invention is directing to providing a state machine pattern that can be used to express the states and transitions necessary to implement web pages of this type without desynchronisation of the state machine.

### SUMMARY OF THE INVENTION

In brief, this is achieved by a web server having a control arrangement comprising a state machine that is arranged to process an event initiated at a browser to transition from one state to another and a mechanism for generating, in response to entry of the states, corresponding web pages for transmission to the browser. The state machine comprises at least one superstate that comprises first and second states, the first state being selected by default on entry to the superstate, and at least one transition is defined from the superstate to the second state, the transition being associated with an action that provides to the browser information that is not destined to viewed in the browser. A web page generated in response to entry of the first state includes at least a link corresponding to the transition and the arrangement is such that entry into the second state does not result in the generation of a web page for transmission to the browser.

In this way, the "download dynamic information" browser behavior can be accommodated within a state machine solely driven by events and in which processing occurs during transitions.

In other aspects the invention provides methods of processing a download request in a web server and methods of configuring and operating a web server.

### BRIEF DESCRIPTION OF THE DRAWINGS

Embodiments of the invention will now be described by way of example only, with reference to the following figures, wherein:
Fig 1 is a schematic diagram showing a web application in the prior art;
Fig 2 is a schematic diagram showing a web application in an embodiment of the invention;

### DETAILED DESCRIPTION OF THE PREFERRED EMBODIMENT

In the embodiments to be described below, the JavaServer Pages (JSP) technology is employed in the web server as a means to dynamically generate web pages, although it will be appreciated that any other suitable dynamic Web scripting/programming arrangement may equally be used for this. As is well known, the JSP technology uses XML-like tags to encapsulate the logic that generates the content for a web page. The application logic can reside in server-based resources (such as JavaBeans) that the page accesses via these tags.

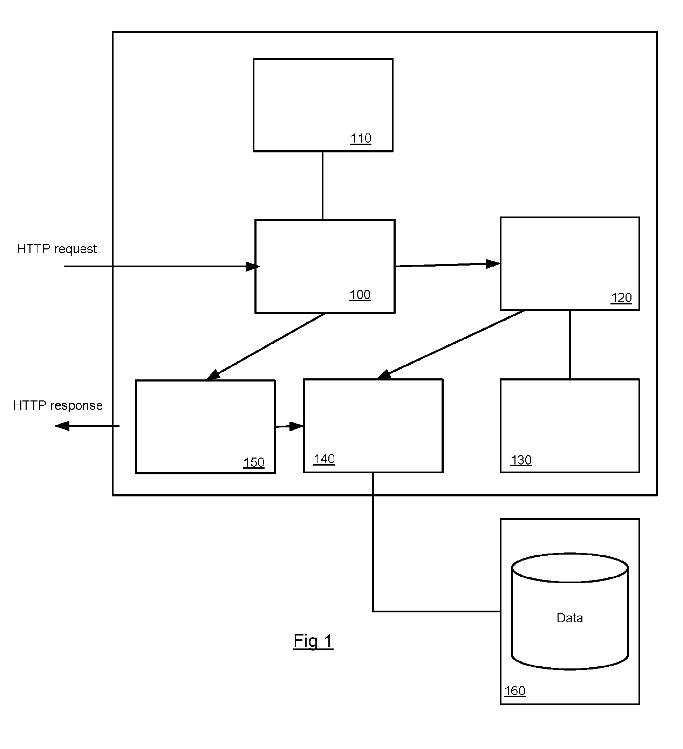

Fig 1 illustrates a web application architecture in which a controller component is provided with a state machine. The operation of such a web application is as follows. First an incoming http request is received by a controller servlet 100 which manages application flow and logic in a manner to be described in more detail below. Event-Type mapper 110 translates the HTTP messages sent to the application server into event objects that are meaningful for the application. Then, the events are passed to a state machine controller 120 which consumes the event according to a state machine definition 130. A session manager and session controller (not shown) would also normally be present to manage user authorization in generally known manner.

The architecture also comprises one or more JSP pages 150 and one or more JavaBeans in JavaBean manager 140 that may be used for accessing external data resources illustrated at 160.

As is well known, servlets are server-side software modules that fit into a web server framework and can be used to extend its capabilities. A JavaBean is simply a building block component that can be combined with other components in the same or other computers in a distributed network to form an application. Such components can be deployed on different servers in a network and communicate with each other for needed services. The general operation of such a system will be generally well understood by those skilled in the art.

In such architectures, there is not normally any processing logic within the JSP pages themselves; they are simply static templates that are arranged to be populated by retrieving any objects or beans that may have been previously created, and extracting the dynamic content from them.

State machine definition 130 defines the flow and logic of the web application. States represent views and transitions between states represent actions. Web application developers define the states and transitions which handle request parameters, use business objects to handle business logic, and populate page beans given to a bean manager 140 to display information on pages.

The state machine used in this embodiment can contain nested states. In the state machine definition 130 each atomic state, that is each state that does not itself have sub-states, represents a screen that the user will see, with transitions among the various states representing the navigation flow between the screens. Superstates are used to encapsulate and provide transitions that are common to all of their substates and to provide boundary functions for various functional zones.

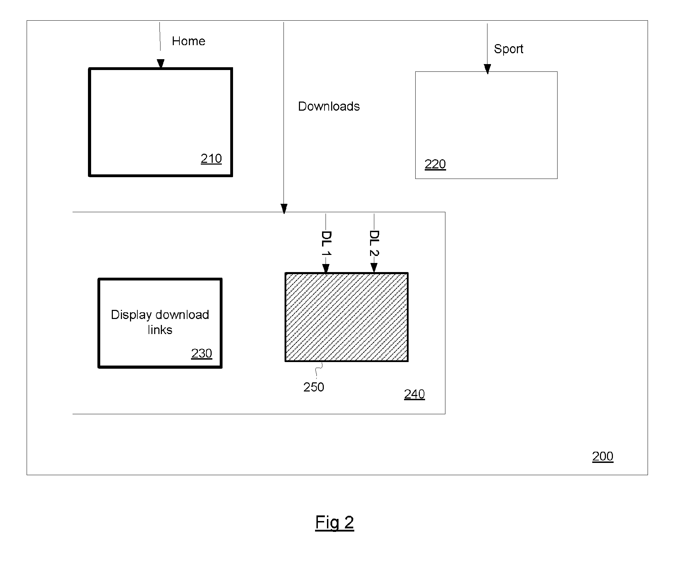

To illustrate the operation of the state machine controller, Fig 2 is a hierarchical state diagram showing a set of different application screens and how a user can go from one to another by doing which action. The diagram comprises a "Home" state 210, a "Sport" state 220 and a "Download" state 230 contained within a further state 240.

Within each superstate, one substate illustrated in bold is selected as the default substate that is entered by default on entry to the superstate. This default substrate can be either configured to always be the same state, or can be dynamically computed on entry to the superstate. For example, on entry to the site, the home state 210 is selected as the default state within super state 200. Thus on first entry to the site, it is the web page associated with home state 210 that is generated and displayed. Similarly, on entry to superstate 240, it is the page 230 that is generated and displayed.

It will be understood that, since the state machine is hierarchical, transitions that are illustrated as being available from a superstate are available from each of the substates within the superstate. So, for instance the "Home" event is available from each of the three atomic substates 210, 220, and 230.

When the State Machine Controller 120 receives an event, it computes the next application state based on the combination of several factors: the current state, the event received, the environment context and the set of configured transitions from the current state. Actions can be attached to the state transition that will take place, to carry out the desired business logic.

After event handling and a new application state has been determined, display of the page associated with that new state is triggered. The controller servlet 100 forwards control to JSP view generator 150 to generate an HTML web page that will be sent the client browser. JSP view generator 150 typically makes use of Javaserver pages Standard Tag Library (JSTL) to help produce the HTML. These tag libraries in turn use information stored in the page beans.

Once the page is generated, provided to the browser in an HTTP response and displayed, it presents options to the user for another interaction, and the cycle repeats itself.

Thus, in systems of the above described type, the hierarchical state machine formally describes the set of states that the application can be in, and the configuration of the state machine is the main support for controlling the operation of the web application.

When an application is configured to provide a page where from which users can download dynamically-generated information, a problem with the state machine model arises because the downloading operation results in information being transmitted in the http response that will not be interpreted by the browser as a new page.

As a result, the page listing the links will still be displayed and the user can still click on them to download the dynamic information again and again, even though there has been some processing on the server, resulting in a transition. A web browser cannot accept both a view (an HTML page) and data to be downloaded at the same time and therefore. The transition cannot be reflexive to the same state, because then a new view would be generated. There is thus an inherent desynchronisation between the state of the application as expressed by the state of the state machine and the actual state of the browser.

In order to reconcile the state machine model with the web-browser behaviour, a special kind of state 250 - that will be referred to herein as a black state - is used in the manner illustrated in Fig 2. The particularity of black state 250 is that it does not have an associated view. The state machine is therefore arranged so that when such a state is entered, no view is generated.

Fig 2 shows a design pattern for the state machine that illustrates the integration such a state within the state machine paradigm.

Referring to Fig 2, a "Download" transition is directed to state 240. This is the transition that is triggered when the user requests the download page with the links to get the dynamic information by clicking a "view download links" link in any of the other substates of state 200.

Upon entering the "Download" state, which is not a fmal state since it contains sub-states, the state selector is called, which always redirects to the "Display" state 230. This state is an atomic state, and the view attached to it displays a page with, in this example, two download links labeled "DL 1" and " DL 2".

When the user clicks on either of these links, a corresponding event will be generated and sent to the state machine. The transitions start from the "Download" state and are therefore inherited by the "Display" state. In other words, when the "DL 1" event is received, the application will move from "Display" state 230 to black state 250, even though the transition is not directly originating from state 230 but from the outer state 240.

Black state 250 is a special state with no view attached. The transition actions attached to the processing of the "DL 1" or "DL 2" events will generate the dynamic data to the user's browser, which will normally then prompt the end-user to either save the file somewhere or to open it with an application. However, the view displayed in the browser will not change, i.e. the user will still see the page generated with the downloading links , ie the view associated with the "Display" state 230.

This has the consequence that after the first download (triggered by the DL 1 event), the user may still click on "DL 2". This in turn will cause the downloading of the dynamic information associated with the DL 2 event because from the black state 250, the transition is inherited from the state 200.

The advantage of this technique is that it allows a standard state machine definition, using state machine transitions only, to express the ability to download information that is consumed by an application other than the web browser. The action of generating the information to be downloaded is performed on the action attached to the triggered transition.

It will be appreciated that any number of transitions to the black hole state may be defined from download super state 200.

It will be appreciated that commercialised forms of the present embodiment would in practice take the form of a set of computer programs adapted to run on general-purpose computing platforms within general-purpose operating environments such as are provided by the Microsoft Windows, Linux or HP-UX operating systems and their related programming libraries and tools. These programs may be marketed in the form of suitably coded computer program products including program code elements that implement the functionality described. It will be appreciated though that the techniques described may equally be implemented as special purpose hardware or any combination of software, hardware and/or firmware.

The above discussion is meant to be illustrative of the principles and various embodiments of the present invention. Numerous variations and modifications in each of the illustrated examples will become apparent to those skilled in the art once the above disclosure is fully appreciated. It is intended that the following claims be interpreted to embrace all such variations and modifications.

## Claims

1. A web server having a control arrangement comprising a state machine that is arranged to process an event initiated at a browser to transition from one state to another and a mechanism for generating, in response to entry of the states, corresponding web pages for transmission to the browser, the state machine comprising at least one superstate that comprises first and second states, the first state being selected by default on entry to the superstate, and at least one transition defined from the superstate to the second state, the transition being associated with an action that provides to the browser information that is not destined to viewed in the browser, wherein a web page generated in response to entry of the first state includes at least a link corresponding to the transition and the arrangement being such that entry into the second state does not result in the generation of a web page for transmission to the browser.

2. Method of processing a download request in a web server having a control arrangement comprising a state machine that is arranged to process an event initiated at a browser to transition from one state to another and a mechanism for generating, in response to entry of the states, corresponding web pages for transmission to the browser, the state machine comprising at least one superstate that comprises first and second states, the first state being selected by default on entry to the superstate and at least one transition from the superstate to the second state, the transition being associated with an action that provides to the browser information that is not destined to viewed in the browser, the method comprising:
generating a web page in response to entry of the first state, the web page including at least a link corresponding to the transition; and
entering the second state without generating a web page for transmission to the browser.

3. Method of configuring and operating a web server, the method comprising:
providing a control arrangement comprising a state machine that is arranged to process an event initiated at a browser to transition from one state to another and a mechanism for generating, in response to entry of the states, corresponding web pages for transmission to the browser;
defining in the state machine at least one superstate that comprises first and second states, the first state being selected by default on entry to the superstate;
defming in the state machine at least one transition from the superstate to the second state, the transition being associated with an action that provides to the browser information that is not destined to viewed in the browser;
generating a web page in response to entry of the first state, the web page including at least a link corresponding to the transition; and
entering the second state without generating a web page for transmission to the browser.
